# EUROPEAN PATENT SPECIFICATION

(11) **EP 3 570 491 B1**
(45) Date of publication and mention of the grant of the patent: **05.05.2021**
(21) Application number: 18843887.3
(22) Date of filing: 10.08.2018
(51) Int. Cl.: H04L 12/24

(54) **ASSOCIATION MANAGEMENT METHOD AND NETWORK NODE**
ZUORDNUNGSVERWALTUNGSVERFAHREN UND NETZWERKKNOTEN
PROCÉDÉ DE GESTION D'ASSOCIATIONS ET NOEUD DE RÉSEAU

(30) Priority: 11.08.2017 CN 201710687718
(43) Date of publication of application: 20.11.2019
(73) Proprietor: Huawei Technologies Co., Ltd., Longgang District Shenzhen, Guangdong 518129 (CN)
(72) Inventor: WANG, Rui, Shenzhen Guangdong 518129 (CN); DAI, Mingzeng, Shenzhen Guangdong 518129 (CN); ZENG, Qinghai, Shenzhen Guangdong 518129 (CN)
(74) Representative: Epping - Hermann - Fischer
(86) International application number: PCT/CN2018/100112
(87) International publication number: WO 2019/029740

(56) References cited:
- CN-A- 101 237 672
- US-A1- 2011 153 844
- US-A1- 2015 256 436
- INTEL: "23.502: Stickiness control of UE-specific RAN-CN association on N2", 3GPP DRAFT; S2-171955_23502_STICKINESS_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Busan, Korea; 20170327 - 20170331 21 March 2017 (2017-03-21), XP051257534, Retrieved from the Internet: URL:http://www.3gpp.org/ftp/tsg_sa/WG2_Arc h/TSGS2_120_Busan/Docs/ [retrieved on 2017-03-21]
- NOKIA ET AL: "Text Proposal for SCTP for TS 38.412", 3GPP DRAFT; R3-172143_TPSCTPASSOC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, P.R. China; 20170627 - 20170629 26 June 2017 (2017-06-26), XP051302090, Retrieved from the Internet: URL:http://www.3gpp.org/ftp/Meetings_3GPP_ SYNC/RAN3/Docs/ [retrieved on 2017-06-26]
- QUALCOMM INCORPORATED: "Supporting multiple SCTP associations towards the AMF", 3GPP DRAFT; R3-172446_MULTIPLE SCTP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, China; 20170627 - 20170629 26 June 2017 (2017-06-26), XP051302387, Retrieved from the Internet: URL:http://www.3gpp.org/ftp/Meetings_3GPP_ SYNC/RAN3/Docs/ [retrieved on 2017-06-26]
- ERICSSON: "Signalling Transport of the NG-C interface", 3GPP DRAFT; R3-172526, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, P.R. China; 20170627 - 20170629 26 June 2017 (2017-06-26), XP051302466, Retrieved from the Internet: URL:http://www.3gpp.org/ftp/Meetings_3GPP_ SYNC/RAN3/Docs/ [retrieved on 2017-06-26]
- ERICSSON: "Introducing the use of SCTP for NG-C", 3GPP DRAFT; R3-172528, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao, P.R. China; 20170627 - 20170629 26 June 2017 (2017-06-26), XP051302468, Retrieved from the Internet: URL:http://www.3gpp.org/ftp/Meetings_3GPP_ SYNC/RAN3/Docs/ [retrieved on 2017-06-26]
- Qualcomm Incorporated: "Supporting multiple SCTP associations towards the AMF", 3GPP TSG-RAN WG3 NR#2 adhoc R3-172446, no. R3-172446, 29 June 2017 (2017-06-29), XP051308082,
- Ericsson: "Signalling Transport of the NG-C interface", 3GPP TSG-RAN WG3 NR adhoc meeting #2 R3-172526, no. R3-172526, 29 June 2017 (2017-06-29), XP051307835,

## Description

This application claims priority to Chinese Patent Application No. 201710687718.6, filed with the Chinese Patent Office on August 11, 2017 and entitled "ASSOCIATION MANAGEMENT METHOD AND NETWORK NODE".

### TECHNICAL FIELD

Embodiments of the present invention relate to the communications field, and in particular, to an association management method and a network node.

### BACKGROUND

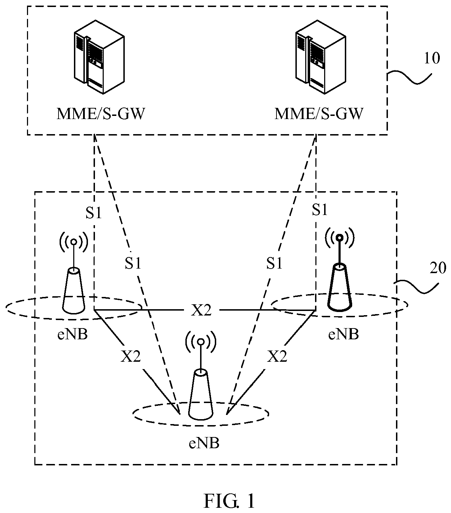

A communications protocol of a fourth-generation mobile communications technology (the 4th Generation Mobile Communication Technology, 4G) specifies that as shown in FIG 1, only one stream control transmission protocol (Stream Control Transmission Protocol, SCTP) association (association) can be established on an S1-MME interface (S1 shown in FG 2) that is used to transmit control information and that is established between an access network 20 (also referred to as an evolved universal terrestrial radio access network (Evolved Universal Terrestrial Radio Access Network, E-UTRAN), for example, a base station (eNodeB, eNB)), and a core network control plane entity 10 (also referred to as an evolved packet core (Evolved Packet Core, EPC), for example, a mobility management entity (Mobility Management Entity, MME) and a user plane entity S-GW). The SCTP association is a connection established between two SCTP endpoints (for example, an access network and a core network).

In a conventional technical solution, an initial establishment procedure of an S1-MME control plane interface is as follows: An eNB initiates an S1 setup procedure at a radio network layer (Radio Network Layer, RNL) to an MME connected to the eNB, to trigger establishment of an SCTP association at a transport network layer (Transport Network Layer, TNL). Then, TNL establishment starts. For example, under support of an S1-flex function in LTE, the eNB initializes an S1 interface for each MME node in a pool area to which the eNB belongs. A list of the MME nodes in the pool area and one initial corresponding remote IP address may be directly configured by the eNB during network deployment. Then, the eNB starts the TNL establishment by using this IP address. Once the S1 setup procedure is completed, the S1-MME control plane interface can be used. However, in a future mobile communications network (for example, a fifth-generation mobile communication network (fifth-generation mobile communication Technology System, 5GS)), a core network and an access network may use a technology such as network functions virtualization (Network Functions Virtualization, NFV). Therefore, a core network control plane entity (for example, an access and mobility management function (Access and Mobility Management Function, AMF)) and an access network function entity (for example, a next-generation base station (New Radio Node, gNB) or an ng-eNB (an eNB that can access a 5G core network)) in a 5G network architecture may also be dynamically expanded or migrated. In this case, if one SCTP association is established on an interface (for example, an NG interface (interface)) between the gNB and the AMF or on an interface between a CU and a DU, load sharing cannot be implemented. Therefore, a plurality of SCTP associations need to be established on one interface. However, in a conventional technology, an SCTP association is usually managed by using an address used to establish the SCTP association, and consequently signaling overheads are inevitably increased when a plurality of SCTP associations exist on one interface.

INTEL, "23.502: Stickiness control of UE-specific RAN-CN association on N2", vol. SA WG2, no. Busan, Korea, 3GPP DRAFT; S2-171955_23502_STICKINESS_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_sa/WG2_Arch/TSGS2_120_Busan/Docs/ discloses, that Individual AMF Instances (i.e. their number, size or load) are not visible to the RAN. Instead, the RAN node has a set of TNL associations connecting to the same AMF Group. For instance, the RAN node knows that it has three TNL associations connecting to AMF Group 1, and another three TNL associations connecting to AMF Group 2. The combined <AMF Instance><NG-TMSI> field uniquely identifies the UE within an AMF Group ID.

NOKIA ET AL, "Text Proposal for SCTP for TS 38.412", vol. RAN WG3, no. Qingdao, PR. China; 3GPP DRAFT; R3-172143 TPSCTPASSOC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN3/Docs/ discloses, that gNB and AMF shall support a configuration with a single SCTP association per gNB/AMF pair. Configurations with multiple SCTP endpoints per gNB/AMF pair should be supported. When configurations with multiple SCTP associations are supported, the AMF may request to dynamically add/remove SCTP associations between the gNB/AMF pair. The gNB shall establish the SCTP association. Transport network redundancy can be achieved by SCTP multi-homing between two end-points, of which one or both is assigned with multiple IP addresses. SCTP end-points shall support a multi-homed remote SCTP end-point. If the association initialization to an IP destination address of the AMF is unsuccessful and alternative destination IP address(es) are known, the gNB reattempts initialization to an alternative IP address.

US 2011/153844 A1 discloses a system, method and computer program for monitoring a telecommunications network that comprises a plurality of Mobility Management Entity (MME) nodes and a plurality of evolved UTRAN NodeB (eNodeB) nodes coupled by S1-MME interfaces. A Stream Control Transmission Protocol (SCTP) association identifier is assigned to an SCTP association between interconnected MME and eNodeB nodes. Specific S1-MME messages allow discovering the MME nodes and the eNodeB nodes with their network identifiers, identifying the connections between them and populating proper tables for this topology information.

### SUMMARY

This application provides association management methods, network node and a computer readable storage medium as defined by the appended independent claims 1 and 10-12, so as to reduce signaling overheads. Further aspects of the invention are defined by the appended dependent claims. In the following, parts of the description and drawings referring to embodiments which are not covered by the claims are not presented as embodiments of the invention, but as examples useful for understanding the invention.

### BRIEF DESCRIPTION OF DRAWINGS

FIG. 1 is a schematic diagram of an LTE network architecture in the prior art;

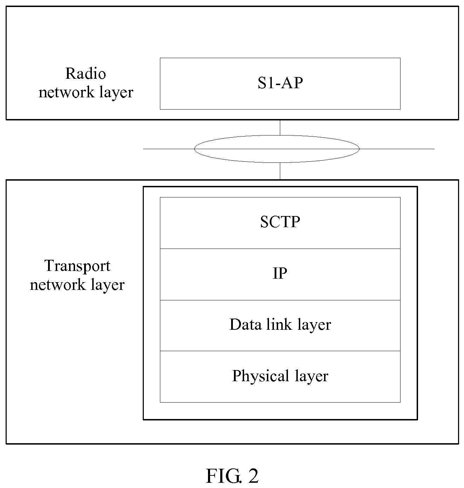

FIG. 2 is a schematic diagram of a protocol stack in the prior art;
FIG. 3 is a schematic diagram 1 of a network architecture according to an embodiment of the present invention;
FIG. 4 is a schematic diagram 1 of a protocol stack according to an embodiment of the present invention;
FIG. 5 is a schematic diagram 2 of a network architecture according to an embodiment of the present invention;
FIG. 6 is a schematic diagram 2 of a protocol stack according to an embodiment of the present invention;
FIG. 7 is a schematic flowchart 1 of an association management method according to an embodiment of the present invention;
FIG. 8 is a schematic flowchart 2 of an association management method according to an embodiment of the present invention;
FIG. 9 is a schematic flowchart 3 of an association management method according to an embodiment of the present invention;
FIG. 10 is a schematic flowchart 4 of an association management method according to an embodiment of the present invention;
FIG. 11 is a schematic flowchart 5 of an association management method according to an embodiment of the present invention;
FIG. 12 shows a scenario to which a method according to an embodiment of the present invention is applied;
FIG. 13 shows another scenario to which a method according to an embodiment of the present invention is applied;
FIG. 14 is a schematic flowchart of another association management method according to an embodiment of the present invention;
FIG. 15 is a schematic structural diagram of a first network node according to an embodiment of the present invention;
FIG. 16 is a schematic structural diagram of another first network node according to an embodiment of the present invention;
FIG. 17 is a schematic structural diagram of still another first network node according to an embodiment of the present invention;
FIG. 18 is a schematic structural diagram of a second network node according to an embodiment of the present invention;
FIG. 19 is a schematic structural diagram of another second network node according to an embodiment of the present invention;
FIG. 20 is a schematic structural diagram of still another second network node according to an embodiment of the present invention; and
FIG. 21 is a schematic structural diagram of yet another first network node according to an embodiment of the present invention.

### DESCRIPTION OF EMBODIMENTS

The term "a plurality of' in this application means two or more.

The terms "first", "second", and the like in this application are merely intended to distinguish between different objects, and are not intended to limit a sequence thereof. For example, a first association and a second association are merely intended to distinguish between different associations, and are not intended to limit a sequence thereof.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

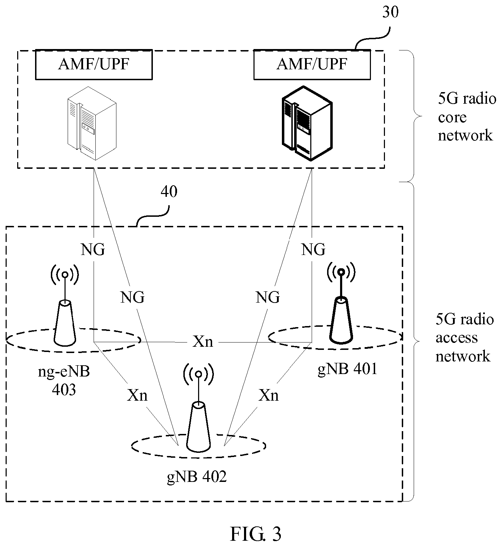

FIG. 3 is a diagram of a system architecture according to an embodiment of the present invention. The system architecture includes a core network 30 (for example, a 5G core network (5G Core Network, 5GC) is used as an example in FIG. 3) and an access network 40 (for example, a 5G radio access network (New Radio Access Network, New RAN) is used as an example in FIG. 3). The core network 30 includes one or more core network control plane entities and core network user plane entities. The access network 40 includes one or more access network entities.

The core network control plane entity may be a mobility management network element (for example, an access and mobility management function (access and mobility management function, AMF) network element), and the core network user plane entity may be a user plane function (User Plane Function, UPF) network element.

It may be understood that the core network control plane entity may further include a session management function (session management function, SMF) network element. The access network entity includes one or more base stations (for example, a gNB 401, a gNB 402, and an ng-eNB 403). An interface (interface) between any AMF and a gNB or an ng-eNB is referred to as an NG interface, and a control plane of the NG interface may be referred to as an NG control plane (NG control plane, NG-C). A plurality of SCTP associations may be established on one NG-C interface to perform expansion and load sharing of the interface. An interface between any two gNBs is an Xn interface.

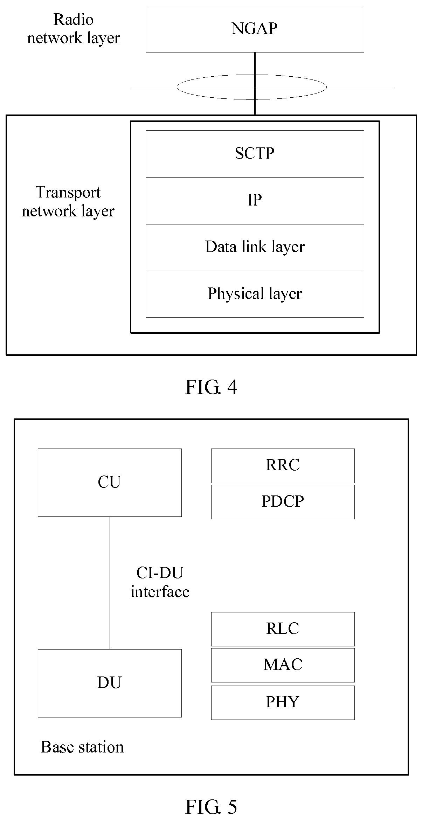

FIG. 4 shows a protocol stack on the control plane of the NG interface. The protocol stack includes a transport network layer (transport network layer, TNL) and a radio network layer (Radio network layer, RNL). The TNL includes a data link layer (Data link layer, DLL), a physical layer (Physical lay), and an IP layer. To ensure reliable transmission of a signaling message, the TNL uses an IP-based SCTP (Stream Control Transmission Protocol) protocol. An application layer signaling protocol used by the RNL is referred to as an NG application protocol (NG Application Protocol, NGAP). The NGAP includes two types of messages: a UE-associated message (UE-associated signaling) and common signaling (common signaling). The UE-associated message may be used in processes such as session management, mobility management, and context management of UE, and the common signaling may be used for interface management, configuration update of a base station or a core network device, delivery of a paging message, and the like.

A future access network may be implemented by using a cloud radio access network (cloud radio access network, C-RAN) architecture. Therefore, in a possible manner, a protocol stack architecture and function of a conventional base station is split into two parts: a centralized node (Centralized Unit, CU) and a distributed node (Distributed Unit, DU). The CU and the DU are actually deployed in a relatively flexible manner. For example, CUs of a plurality of base stations are integrated into a relatively large function entity. Therefore, this application provides an internal architecture of a RAN.

As shown in FIG. 5, a base station includes a CU and a DU, and there is a CU-DU interface between the CU and the DU. The CU-DU interface may also be referred to as an F1 interface, a control plane (Control plane) of the CU-DU interface is referred to as F1-C, and a user plane (User plane) of the CU-DU interface is referred to as F1-U.

Similar to the NG interface, two types of messages may be transmitted on the F1-C interface, namely, a UE-associated message (UE-associated signaling) and common signaling (common signaling). The UE-associated message may be used in processes such as session management, mobility management, and context management of UE, and the common signaling may be used for interface management, configuration update of the CU/DU, and the like.

In addition, the future access network may also use an NFV technology, so that a function entity of the access network can also be dynamically expanded and migrated. Therefore, the CU-DU interface between the CU and the DU also requires dynamic expansion and load sharing. This may also be implemented by establishing a plurality of SCTP associations.

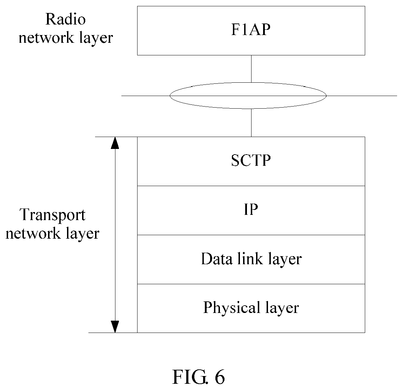

FIG. 6 shows a protocol stack on the control plane of the CU-DU interface. A difference between the protocol stack and the protocol stack in FIG. 4 lies in that the protocol stack in FIG. 4 is based on the NG interface, and the protocol stack in FIG. 6 is based on the F1 interface.

It may be understood that the foregoing architectures shown in FIG. 3 and FIG. 5 are merely examples of a scenario to which a method according to this application is applied, and do not constitute a limitation on this application. The technical solutions provided in this application may also be applied to a communication scenario in which a plurality of associations need to be established on an interface between two components in any network node (for example, a CU and a DU in a gNB) or between an access network control plane entity and a core network control plane entity in a 2G, 3G, and 4G communications system, a 5G communications system, and a future communications system, and the plurality of associations need to be managed.

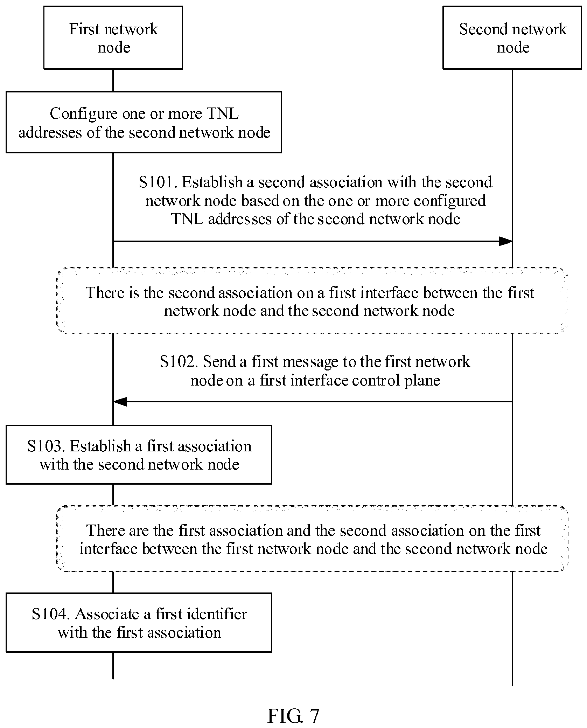

FIG. 7 shows an association management method according to an embodiment of the present invention. The method includes the following steps.

S101. A first network node establishes a second association with a second network node based on one or more configured TNL addresses of the second network node (for example, the TNL address includes at least one of one or more TP addresses and port numbers), where the second association is an association that is first established by the first network node with the second network node for a first interface.

Optionally, the TNL address of the second network node in this embodiment of the present invention may be configured by an operation, administration and maintenance (Operations Administration & Maintenance, OAM) unit for the first network node. In this way, the first network node may establish the second association with the second network node based on a specific TNL address (for example, a TNL address dedicated to establish a primary association) in the one or more TNL addresses of the second network node or any one of the TNL addresses of the second network node, to facilitate subsequent signaling interaction.

The association in this embodiment of the present invention is a correspondence between two SCTP endpoints, and is used to provide a transmission service for an upper layer protocol. Therefore, the association may be an SCTP association.

It may be understood that, after the beginning association (for example, the second association) between the first network node and the second network node is established, the first interface (an NG interface shown in FIG. 3 or a CU-DU interface shown in FIG. 5) between the first network node and the second network node may be used. Therefore, the first network node and the second network node may transmit an interface control plane message by using the second association, for example, an NGAP message or an F1AP message. For example, the first network node sends a first interface control plane establishment request message (for example, NG Setup Request or F1 Setup Request) by using the second association, and the second network node returns a first interface control plane establishment response message (for example, NG Setup Response or F1 Setup Response) by using the second association.

Optionally, after a first interface control plane is established, the first network node and/or the second network node establish/establishes a second association list, to manage one or more associations used on the first interface control plane. The second association list includes at least one of the following information: a TNL address used to establish the second association, and identification information of the second association. For example, the identification information of the second association may be a default identifier such as 0, or the identification information of the second association may be configured by the OAM.

Optionally, after the first interface control plane is established, the first network node or the second network node specifies the second association as a primary (primary) association. The primary association is the only association that can be used to transmit a common message. The second association is included in the second association list.

Further, optionally, the first network node and/or the second network node identify/identifies the second association as the primary association in the second association list. For example, a primary association identifier is added to the second association list, and the primary association identifier is associated with the second association.

It should be noted that the step of specifying the second association as the primary association in this application may be performed after step S102, S105, or S107. This is not limited in this application.

S102. The second network node sends a first message to the first network node by using a first interface control plane (for example, NG-C or F1-C), where the first message is used to instruct the first network node to establish a first association (the first association may also be referred to as an additional association (additional association)) on the first interface.

Optionally, the first message is sent on the second association.

Optionally, the first message carries a first association list, and the first association list includes at least one of one or more TNL addresses (for example, the TNL address includes at least one of one or more IP addresses and port numbers) of the second network node that are used to establish an additional association (for ease of description, the TNL address is referred to as a first address below) and a first identifier associated with each of the one or more first addresses (for example, the first message carries a plurality of first addresses, or the first message carries a first identifier associated with each of a plurality of first addresses, or the first message carries a plurality of first addresses and a first identifier associated with each of the plurality of first addresses). In this way, when establishing an association with any one of the one or more first addresses, the first network node may assign a first identifier associated with the first address to an association established by using the first address.

The first association list is used to instruct to determine the first association based on a first identifier, and in a subsequent process, is further used to instruct to determine, based on identification information of UE, an association associated with the UE.

For example, a relationship between each of the plurality of first addresses and a first identifier associated with each first address is as follows: an add 1 is associated with an index 1, an add 2 is associated with an index 2, and an add 3 is associated with an index 3. Therefore, when establishing an association 1 with the second network node based on the add 1, the first network node may assign the index 1 to the association 1. For example, the first message is NG SETUP RESPONSE or AMF CONFIGURATION UPDATE in the NGAP message, or F1 SETUP RESPONSE or CU CONFIGURATION UPDATE in the F1AP.

S103. The first network node establishes the first association with the second network node based on a first association list carried in the first message, where the first association is established by the first network node after there is the second association on the first interface, and the first interface is a connection interface between the first network node and the second network node.

It may be understood that in this application, the first association is established after there is the second association on the first interface. In an actual process, the first association may alternatively be established before the second association. In this case, a TNL address of the second network node for establishing the first association is configured by the OAM for the first network node. When the first association is established after there is the second association on the first interface, the TNL address for establishing the first association is sent by the second network node to the first network node on the second association.

It should be noted that the first association list in this application includes at least one association.

S104. The first network node associates a first identifier with the first association, so that the first association has the first identifier, where the first identifier is used to identify the first association.

In a possible implementation, the first network node may directly associate the first identifier with the first association (for example, the first network node may number each association based on a quantity of established associations, and use a number of each association as a first identifier of each association), or may use, as the first identifier of the first association, an identifier that is carried in the first message and that is associated with each first address. When the first network node directly associates the first identifier with the first association, the first message may carry only a plurality of first addresses. However, in order that the second network node also has an association relationship between the first identifier and the first association, to manage the first association, the first network node may further send the association relationship between the first identifier and the first association to the second network node after directly assigning the first identifier to the first association. In another possible implementation, when the first association is a first established association on the first interface, the first identifier associated by the first network node with the first association may be configured by the OAM, in other words, the OAM determines an association relationship between the TNL address used to establish the first association and the first identifier. In this way, after establishing the first association, the first network node may associate the first identifier assigned by the OAM with the first association.

In a possible implementation, the first identifier is an identifier associated with an address of the second network node that is used to establish the first association. In this way, after the first network node assigns the first identifier to the first association, even if the first network node subsequently manages the first association with the second network node by using the first identifier, the second network node may also determine, based on the first identifier, that an association that needs to be managed is the first association.

Optionally, the first network node and/or the second network node update/updates the second association list, so that the second association list includes at least one of the following information: the first address of the first association (namely, the TNL address used to establish the first association) and the first identifier of the first association.

According to the association management method provided in this application, the first association is established on the first interface after there is the second association (for example, the primary association) on the first interface, so that there are a plurality of associations (for example, the first association and the second association) on the first interface between the first network node and the second network node. In this way, when the first network node and the second network node are dynamically expanded or migrated, load of the first network node and the second network node may be shared by using the plurality of established associations, so as to meet a requirement of a future mobile communications network. In addition, the first identifier (for example, an index) is assigned to the first association, so that in a subsequent configuration related to the first association, only the identifier of the first association needs to be indicated instead of indicating the first association by using a TNL address (for example, one or more IP addresses and port numbers) for establishing the first association. Because the TNL address for establishing the first association usually occupies a relatively large quantity of bits, and a quantity of bits occupied by the first identifier is usually less than the quantity of bits occupied by the TNL address of the first association, signaling overheads can be reduced when there are a plurality of associations on the first interface and the plurality of associations need to be managed.

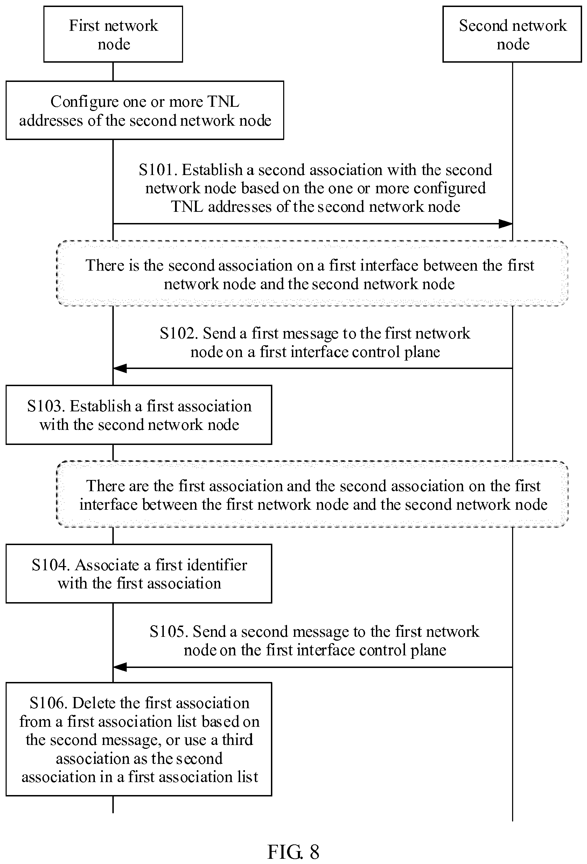

As shown in FIG. 8, to manage the plurality of associations on the first interface, the method provided in this application further includes the following steps.

S105. The second network node sends a second message to the first network node by using the first interface control plane, where the second message carries an identifier of a third association, and the identifier of the third association is used to instruct the first network node to use the third association associated with the identifier of the third association as a primary association; and/or the second message carries a first identifier of the second association, and the second message is used to instruct the first network node to release the second association.

The second association is included in the second association list.

The third association may be one of the plurality of associations on the first interface, or may be an association to be established on the first interface.

S106. The first network node receives the second message on the first interface control plane, and deletes the second association from a second association list based on the second message and/or identifies the identifier of the third association as a primary association in the second association list, where the second association list includes at least a record of the second association and/or includes at least a record of the third association.

It may be understood that when the third association is not one of the associations on the first interface, the second message received by the first network node needs to carry a TNL address of the third association, so that the first network node establishes the third association with the second network node based on the TNL address of the third association. Optionally, the identifier of the third association and/or the TNL address of the third association are/is added to the second association list.

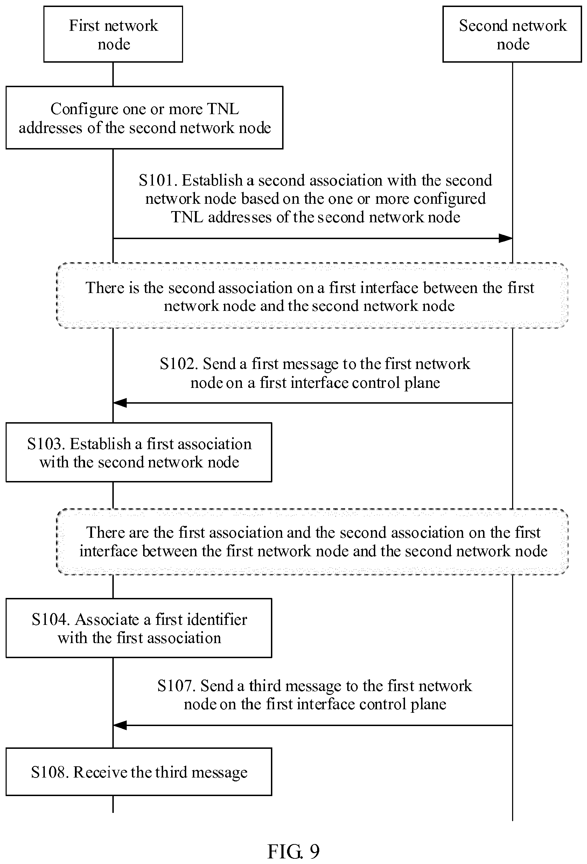

It may be understood that, that the first network node uses the third association associated with the identifier of the third association as the primary association means that the first network node subsequently uses the third association to implement a function of the primary association, for example, to send common signaling. Optionally, as shown in FIG. 9, the method provided in this application further includes the following steps.

S107. The second network node sends a third message to the first network node on the first interface control plane, where the third message is used to instruct the first network node to select an association from a plurality of associations on the first interface, and use the selected association to send or receive a special interface message; or the third message is used to instruct the first network node to establish a fourth association on the first interface, and the fourth association is used to send or receive a special interface message.

Optionally, content carried in the third message may vary with a function of the third message. The third message in this application carries a third association list, and the third association list may include at least one of an identifier of a selected association (a fourth association) and a TNL address of the second network node that is used to establish the selected association (the fourth association). When the third message instructs to establish the fourth association, the third association list needs to carry at least the TNL address of the second network node that is used to establish the fourth association. When the third message is used to instruct to select an association from the plurality of associations on the first interface, the third association list may carry only an identifier of a selected association. In this way, compared with a case in which the TNL address of the second network node that is used to establish the selected association is carried in the third message, signaling overheads of the third message can be reduced.

For example, the fourth association may be used by the first network node to send an initial UE message, or used by the first network node to receive a handover request message, or used by the first network node to send a path switch request message. The fourth association may be used as a candidate primary association.

In this application, the plurality of associations established on the first interface may belong to one association list, or may belong to different association lists. In other words, associations used to implement a same function may be classified into one association list. This is not limited in this application.

S108. The first network node receives the third message sent by the second network node, where the third message is used to instruct the first network node to select an association from associations on the first interface, and the selected association is used to send or receive a special interface message or is used as a candidate primary association or a primary association; or the third message is used to instruct the first network node to establish a fourth association on the first interface, and the fourth association is used to send or receive a special interface message or is used as a candidate primary association or a primary association. The first network node may determine functions of the associations on the first interface by using the third message.

Optionally, when the first network node establishes the fourth association based on the third message, the first network node and/or the second network node update/updates the second association list, so that the second association list includes a TNL of the fourth association and/or an identifier of the fourth association.

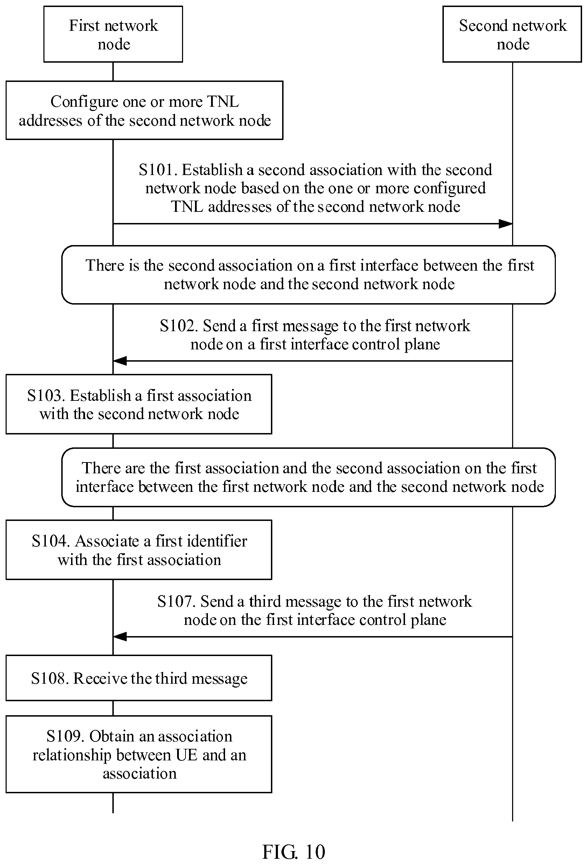

Types of messages sent on different associations are different. Therefore, to enable the first network node to learn of associations that are used to send an interface control plane message such as common signaling (common signaling) and a specific UE-associated message (UE-associated signaling), UE-associated signaling of specific UE can be sent only on a specific association. As shown in FIG. 10, the method provided in this application further includes the following step: S109. The first network node obtains an association relationship between user equipment UE and a fifth association, where the association relationship is used to instruct the first network node to send UE-associated signaling (also referred to as a specific interface message) of the UE on the fifth association, and the fifth association is an association on the first interface.

In this application, in step S109, the first network node may select, based on an association relationship between the UE and an association, an association (for example, the fifth association) associated with the UE, to send the UE-associated signaling such as an initial context establishment message (initial context setup message).

In a possible implementation, step S109 in this application may be implemented in the following manners.

S1091a. The second network node sends the association relationship between the UE and the fifth association to the first network node.

Optionally, the second network node may send the association relationship between the UE and the fifth association to the first network node by using an interface message (for example, a first interface message).

For example, the association relationship between the UE and the fifth association may be a relationship between identification information of the UE and an identifier of the fifth association. The identification information of the UE is used to identify the UE, for example, may be an ID assigned by the first network node to the UE on the first interface, or may be an ID assigned by the second network node to the UE on the first interface, or may be a uniform UE ID on the first interface. This is not limited in this application.

For example, the association relationship between the UE and the fifth association includes one or a combination of the following information: the identification information of the UE, the identifier of the fifth association, and a TNL address of the fifth association.

For example, the first interface message may be Initial Context Setup, UE Context Modification, UE Context Modification Indication, UE Context Modification Indication Confirm, UE-SCTP Association Binding Update, UE-TNL Association Binding Update, or the like.

S1092a. The first network node receives the association relationship that is between the UE and the fifth association and that is sent by the second network node.

S1093a. The first network node obtains, based on the received association relationship, the association relationship between the UE and the fifth association. The first network node sends and/or receives the UE-associated signaling of the UE on the fifth association.

Optionally, the first network node and/or the second network node store/stores the association relationship between the UE and the fifth association. For example, the first network node and/or the second network node store/stores the association relationship between the UE and the fifth association in a context of the UE as a part of the context of the UE.

It should be understood that if the first network node and/or the second network node have/has stored an association relationship between the UE and a sixth association before the second network node sends the first interface message, and the sixth association and the fifth association are not a same association, the first network node updates, based on the received association relationship that is between the UE and the fifth association and that is sent by the second network node, an association associated with the UE, in other words, updates the association associated with the UE with the fifth association from the sixth association.

In another possible implementation, step S109 in this application may be further implemented in the following manners.

S1091b. When receiving the UE-associated signaling of the UE on the fifth association, the first network node associates the fifth association with the UE, to obtain the association relationship between the UE and the fifth association.

For example, after the first network node sends associated signaling of UE 1 on an association 1, if the first network node receives the associated signaling of the UE 1 on an association 2, the first network node associates the association 2 with the UE 1, in other words, sends the subsequent UE-associated signaling of the UE 1 on the association 2. The association 2 may be the same as or different from the association 1. This is not limited herein. If the association 2 is the same as the association 1, the first network node maintains an association relationship between the UE 1 and the association 1. If the association 2 is different from the association 1, the first network node updates the association relationship between the UE 1 and the association 1 with an association relationship between the UE 1 and the association 2.

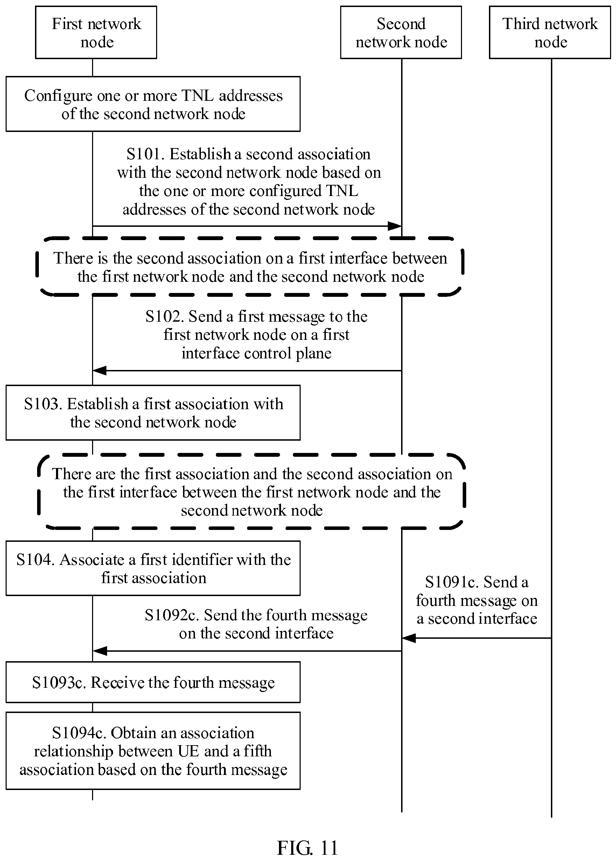

In a handover process based on an interface between base stations (for example, an X2 interface in LTE or an Xn interface in a 5G system), after a source base station selects a target base station for the UE, the source base station sends a handover request message to the target base station by using an interface (for example, the Xn interface) between the source base station and the target base station. The handover request message includes the context of the UE, for example, an identifier of a core network control plane entity (for example, an AMF or an MME) that provides a service for the UE, and a UE ID (for example, an MME NGAP ID) that is on an interface between a base station and a core network control plane entity and that is assigned by the MME to the UE. After receiving the handover request message sent by the source base station, the target base station prepares and reserves a corresponding resource for the UE if the target base station allows the UE to access. In this application, in a scenario in which a plurality of SCTP associations are established on an NG interface between a gNB and an AMF, the handover request message in this application may further include the association relationship between the UE and the association. In this way, when the target base station prepares an access resource for the UE after the UE hands over to the target base station, the target base station prepares the association associated with the UE, so that after the UE subsequently accesses the target base station, the target base station sends the UE-associated signaling of the UE on the association associated with the UE. Therefore, in still another possible implementation, as shown in FIG. 11, step S109 in this application may be further implemented in the following manners.

S1091c. The second network node receives, on a second interface, a fourth message (for example, a handover request message) sent by a third network node, where the fourth message includes the association relationship between the UE and the fifth association, the fifth association is used to instruct the third network node to transmit the UE-associated signaling of the UE on the first interface, and the UE is UE that is to hand over to the first network node. For example, the association relationship between the UE and the fifth association includes one or a combination of the following information: the identification information of the UE, the identifier of the fifth association, and the TNL address of the fifth association. The identification information of the UE may be a UE ID assigned by the third network node to the UE on the second interface and/or a UE ID assigned by a core network entity to the UE on the first interface. For example, the fourth message may be a handover request (Handover Request) message.

S1092c. The second network node sends the fourth message to the first network node. S1093c. The first network node receives the fourth message sent by the second network node.

In a process in which the UE hands over from one base station (for example, the source base station) to another base station (for example, the target base station), to enable the target base station to prepare a resource for the UE in advance, an association may be established and the association relationship between the UE and the association may be changed. The source base station and the target base station may interact with a same AMF, or may interact with different AMFs. Therefore, the following separately describes the foregoing two cases with reference to different scenarios.

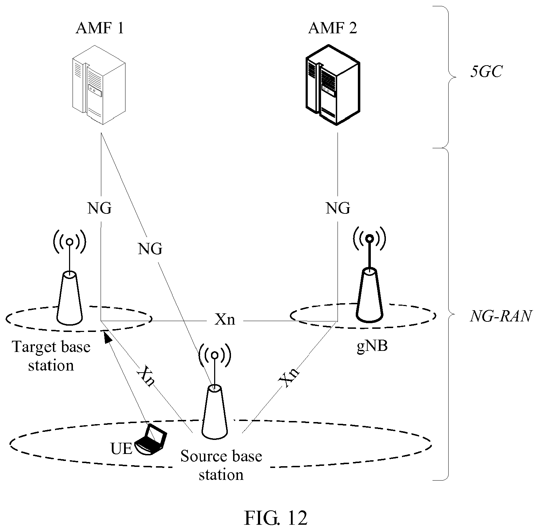

In a scenario shown in FIG. 12, to be specific, in a process in which the UE hands over from the source base station to the target base station, the source base station and the target base station interact with a same AMF 1. Therefore, both a first interface between the source base station and the AMF 1 and a third interface between the target base station and the AMF 1 is the interface between the base station and the core network control plane entity. Therefore, the third network node in this application may be a base station that serves the UE before the UE hands over to the first network node, for example, the source base station. In this case, the first network node is the target base station described above.

In this case, after selecting the target base station for the UE, the source base station sends the handover request message to the target base station by using the second interface (for example, Xn) between the source base station and the target base station.

Optionally, in the scenario shown in FIG. 12, the handover request message carries association information used by the UE on a first interface of the source base station (an interface between the source base station and the core network control plane entity), in other words, the handover request message carries an association relationship between the identification information of the UE and the association information.

Specifically, the association information includes a TNL address (for example, at least one of an IP address or a port number) of the core network control plane entity and/or the identifier of the fifth association. For example, the association information is included in UE context information UE context information.

S1094c. The first network node obtains the association relationship between the UE and the fifth association based on the fourth message, where the fifth association is an association established by the first network node on a third interface based on a TNL address of the fifth association (on a second network node side), and the association relationship between the UE and the fifth association is used to instruct to transmit the UE-associated signaling of the UE on the third interface.

For example, in the scenario shown in FIG. 12, the handover request message includes a TNL address 1 of the core network control plane entity. Because the first network node and the third network node communicate with a same network node, the first network node may determine, based on the TNL address 1 of the core network control plane entity, whether there is an association established by using the TNL address 1 of the core network control plane entity on the third interface, or determine, based on the identifier of the fifth association, whether there is an association associated with the identifier of the fifth association on the third interface. When there is a fifth association associated with the TNL address 1 of the core network control plane entity or the identifier of the fifth association on the third interface, the first network node associates the fifth association on the third interface with the UE. In this way, after the UE hands over from the third network node to the first network node, the UE-associated signaling of the UE on the third interface may be sent by using the fifth association.

Optionally, after step S1094c, this application further includes: The first network node sends a handover instruction to the UE, where the handover instruction is used to instruct the UE to hand over to the first network node, so that the UE can hand over from the source base station to the first network node based on the handover instruction. The first network node sends a path switching request for the UE to the second network node on the third interface. The path switching request is used to instruct the second network node to hand over a control plane connection and a user plane connection of the UE from the third network node to the first network node. Optionally, when the first network node sends the path switching request for the UE to the second network node on the third interface, if the first network node stores the association relationship between the UE and the fifth association, the first network node may send the path switching request by using the fifth association. If the first network node does not store an association relationship between the UE and a specific association, the first network node may select an association from a plurality of associations on the third interface (for example, select, from a specific association list, an association used to send the path switch message) to associate the association with the UE, to send the path switching request for the UE or the subsequent UE-associated signaling of the UE.

Optionally, after receiving the path switching request sent by the first network node, the second network node sends a path switching request response to the first network node on the third interface.

Optionally, if the path switching request response carries the association relationship between the UE and the specific association, the first network node may establish or update the original association relationship between the UE and the association after receiving the association relationship between the UE and the specific association. An example 1 is as follows: When the first network node does not establish the association relationship between the UE and the association (for example, the handover request does not include the association relationship between the UE and the fifth association), the first network node establishes an association relationship between the UE and the association 1 in the context of the UE after receiving the association relationship between the UE and the association 1 in the path switching request response. An example 2 is as follows: When the first network node has established an association relationship between the UE and the association 2, if the first network node determines that the association associated with the UE in the path switching request response is the association 1, the first network node changes the previously recorded association relationship between the UE and the association 2 into the association relationship between the UE and the association 1. An example 3 is as follows: If the first network node determines that an association for receiving the path switching request response message and an association for sending the path switching request are not a same association, the first network node uses the association for receiving the path switching request response message as the association associated with the UE, and establishes or updates the association relationship between the UE and the association. For example, the first network node sends the path switching request on the association 1 (the association 1 may be associated with the UE, or may be selected by the first network node from the plurality of associations), but receives the path switching request response message on the association 2 and associates the association 2 with the UE.

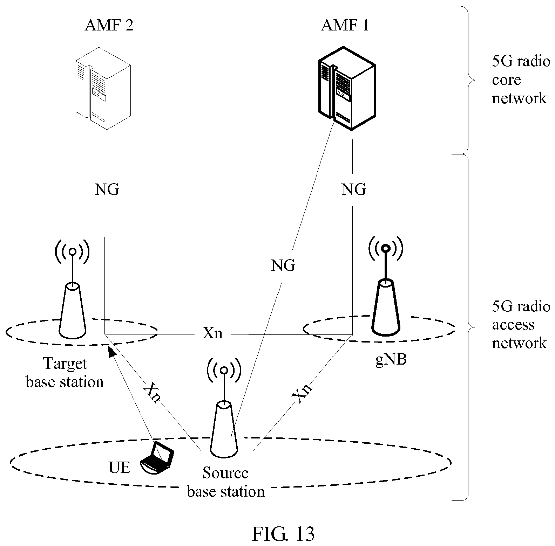

In addition, in a scenario shown in FIG. 13, a difference between FIG. 13 and FIG. 12 lies in that in FIG. 12, the source base station (for example, the third network node) and the target base station (for example, the first network node) are connected to a same core network control plane entity such as the second network node, in other words, there is the first interface between the source base station and the AMF 1 and there is the third interface between the target base station and the AMF 1. In the scenario shown in FIG. 13, the source base station and the target base station are respectively connected to different core network control plane entities, in other words, there is a first interface between the source base station and an AMF 2, and there is the third interface between the target base station (the first network node) and the AMF 1 (the second network node/the third network node). In the scenario shown in FIG. 13, before the UE hands over from the source base station to the target base station, the AMF 1 corresponding to the target base station specifies an association associated with the UE for the target base station, and sends a determined association relationship to the target base station.

Therefore, in the scenario shown in FIG. 13, the third network node is the second network node.

A specific procedure is as follows: The source base station sends a handover required (Handover Required) message to a source core network control plane entity, and the source core network control plane entity sends a relocation request (Relocation Request) message (or another message having a function similar to that of the relocation request message, which is not limited in terms of names) to the third network node (a target core network control plane entity). The target core network control plane entity (namely, a core network control plane entity corresponding to the target base station) sends the handover request message to the target base station. After receiving the handover request message, the target base station returns a handover request response if determining to accommodate the UE.

Optionally, the handover request message carries association information specified by the target core network control plane entity for the UE. Specifically, the association information includes at least one of a TNL address (for example, a TNL address on a target core network control plane entity side) of the specified association and an identifier of the association.

Optionally, if the handover request message carries the specified association information, the target base station establishes an association relationship between the UE and an association associated with the specified association information. Alternatively, when receiving the handover request message on a specific association, the target base station uses an association (for example, the fifth association) for receiving the handover request message as the association associated with the UE, and establishes the association relationship between the UE and the fifth association. After establishing the association relationship between the UE and the association, the target base station sends a handover request response by using the association associated with the UE.

Optionally, the handover request response is used to indicate that the UE may hand over to the target base station. In addition, after the UE accesses the target base station, the target base station sends a handover acknowledgement message to the target core network control plane entity. If the target base station has established the association relationship between the UE and the association, the target base station sends the handover acknowledgement message on the association associated with the UE. If the target base station has not established the association relationship between the UE and the association, the target base station may select an association from the plurality of associations on the first interface as the association associated with the UE (for example, select, from a special association list, an association used to send the handover acknowledgement message), and send the handover acknowledgement message by using the association.

Optionally, the target core network entity sends a message used to instruct to change an association relationship between the UE and an SCTP association.

In addition, in the scenarios shown in FIG. 12 and FIG. 13, before step S102 in this application, the method provided in this embodiment of the present invention further includes the following steps.

S110. The first network node receives a handover request message sent by a third network node, where the handover request message includes the association relationship between the UE and the fifth association, the UE is UE that is to hand over to the first network node, and the fifth association is an association used before the UE hands over to the first network node. It may be understood that in the scenario shown in FIG. 13, the first network node is the target base station, and the third network node is the AMF 2. For example, the association relationship between the UE and the fifth association includes one or a combination of the following information: the identification information of the UE, the TNL address used to establish the fifth association, and identification information of the fifth association.

Sill. When the fifth association is not established, the first network node sends a third message to the second network node, where the third message is used to instruct to establish the fifth association on the third interface. When steps S110 and S111 are added before step S102, in other words, the first message in step S102 in this application may be sent by the second network node under trigger of the third message, establishment of the first association is triggered based on a requirement of the first network node. When steps S110 and Sill are not added before step S102, the second network node may determine, based on a requirement, whether to instruct the first network node to establish the first association.

It may be understood that in the foregoing embodiment, the first network node may be the gNB shown in FIG. 3, the second network node may be the AMF shown in FIG. 3, and the first interface and the third interface may be the NG-C. Alternatively, the first network node may be the DU shown in FIG. 5, the second network node may be the CU shown in FIG. 5, and the first interface and the third interface may be the F1-C.

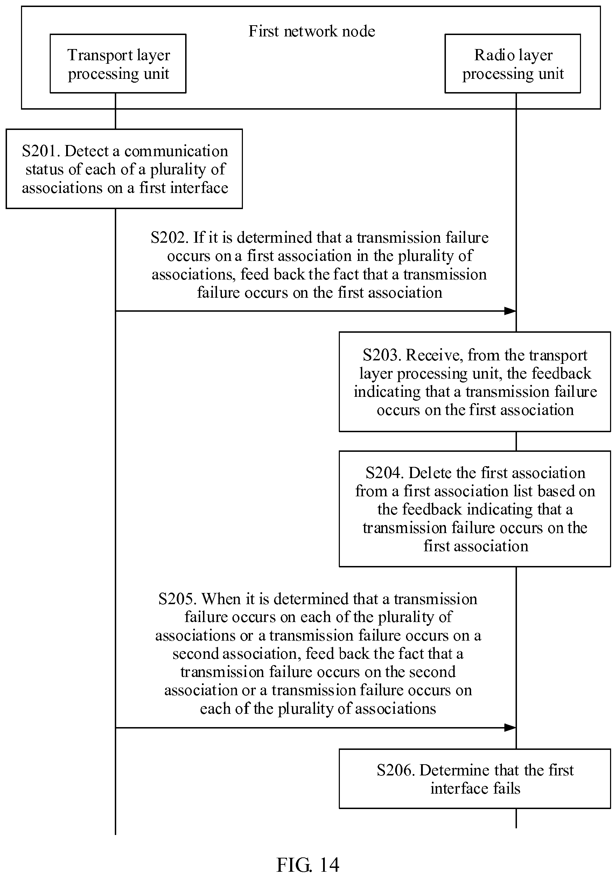

In an actual process, in the scenarios shown in FIG. 3 and FIG. 5, an association failure may occur on the plurality of associations established on the first interface and the third interface. If states of the associations are not updated in time in an association list, an error may occur when a message is sent by using a specific association. Therefore, this application further provides an association management method. The method is applied to a first network node, and the first network node includes a transport layer processing unit and a radio layer processing unit. The transport layer processing unit and the radio layer processing unit are configured to perform transmission on the first interface between the first network node and the second network node. As shown in FIG. 14, the method includes the following steps. S201. The transport layer processing unit detects a communication status of each of a plurality of associations on a first interface.

S202. When determining that a transmission failure occurs on a first association in the plurality of associations, the transport layer processing unit feeds back, to the radio layer processing unit, the fact that a transmission failure occurs on the first association.

Optionally, step S202 may be specifically implemented in the following manner: The transport layer processing unit detects that a transmission failure occurs on the first association in the plurality of associations, and the transport layer processing unit sends a first message to the radio layer processing unit. The first message includes at least one of an address of the first association and an identifier of the first association, the first message is used to feed back the fact that a transmission failure occurs on the first association, and the address and/or the identifier of the first association are/is used to identify the first association.

S203. The radio layer processing unit receives, from the transport layer processing unit, the feedback indicating that a transmission failure occurs on the first association. S204. The radio layer processing unit deletes the first association from a second association list based on the feedback indicating that a transmission failure occurs on the first association, where the second association list includes at least a record of the first association, the first association is one of the plurality of associations on the first interface, and the first interface is a connection interface between the first network node and the second network node.

The second association list in this embodiment of the present invention records at least an association relationship between the first association and a first identifier. Optionally, the first network node obtains identification information of first UE associated with the first association, and deletes an association relationship between the first UE and the first association. For example, the second association list includes identification information of UE associated with the first association. The first network node deletes the association relationship between the first UE and the first association from context information of the first UE.

Further, optionally, the first network node selects a second association as an association associated with the first UE. For example, the first network node stores an association relationship between the first UE and the second association in a context of the first UE. It may be understood that the second association is an association other than the first association on the first interface, and the second association may be included in a special association list (for example, an association used to send an initial UE message is selected from the special association list).

In this embodiment of the present invention, when detecting that the first association in the plurality of associations fails, the transport layer processing unit reports the fact that the first association fails to the radio layer processing unit, so that the radio layer processing unit can delete the record of the first association from a first association list, thereby implementing association management. Because the plurality of associations are established on the first interface, the first interface does not fail when only one association fails, and the first network node and the second network node may still send a control message on an association other than the first association.

It may be understood that the first network node in this application may be a gNB or a DU, or may be an AMF or a CU. As shown in FIG. 4 and FIG. 6, the gNB, the DU, the AMF, and the CU each have a transport layer processing unit (TNL) and a radio layer processing unit (RNL).

Optionally, the method provided in this application further includes the following steps:
S205. When detecting that a transmission failure occurs on each of the plurality of associations or a transmission failure occurs on a third association, the transport layer processing unit feeds back, to the radio layer processing unit, the fact that a transmission failure occurs on each of the plurality of associations or a transmission failure occurs on the third association, where the third association is one of the plurality of associations on the first interface, and the association is used to transmit common signaling.
S206. When the transport layer processing unit reports, to the radio layer processing unit, the fact that a transmission failure occurs on each of the plurality of associations on the first interface or a transmission failure occurs on a second association, the radio layer processing unit determines that the first interface fails.

In addition, in order that the second network node can delete information about an association in time after a transmission failure occurs on the association, this application further includes the following steps:
S207. The radio layer processing unit sends a second message to a peer radio layer processing unit, where the second message is used to instruct the peer radio layer processing unit to delete the first association from a third association list, the third association list includes at least the record of the first association, and the peer radio layer processing unit is located on the second network node.
S208. The peer radio layer processing unit deletes the record of the first association from the second association list. In this way, the second network node can also delete the failed first association in time.

The second network node in this application may be a gNB or a DU, or may be an AMF or a CU. Specifically, when the first network node is a gNB or a DU, the second network node is an AMF or a CU, and when the first network node is an AMF or a CU, the second network node is a gNB or a DU.

Optionally, to avoid a case in which after the record of the first association is deleted, the first network node and/or the second network node still have/has an association relationship between the first association and UE associated with the first association, the method provided in this application further includes the following step:
S209. The radio layer processing unit in the first network node and/or the second network node deletes an association relationship between the first association and target user equipment UE, where the target UE is at least one UE associated with the first association.

Optionally, after step S209, the method provided in this application further includes the following step:
S210. When receiving UE-associated signaling of the target UE, the radio layer processing unit in the first network node and/or the second network node associates a third association with the target UE, where the third association is an association on the first interface. After performing step S210, the radio layer processing unit in the first network node and/or the second network node may further send a third message to the peer radio layer processing unit. The third message includes an association relationship between the third association and the target UE, and the second network node may change a previously recorded association relationship between the target UE and an association into the association relationship between the third association and the target UE.

Optionally, when receiving an indication, the RNL in the second network node (the AMF) sends an interface message to indicate that an association relationship between related UE and an SCTP association is changed. The interface message may indicate that an association associated with UE associated with an SCTP association is changed into another association. In addition, the interface message may be sent together with a message indicating that an association with a peer end fails.

It should be noted that the method steps S201 to S210 provided in this application may be performed after the first identifier is assigned to the first association in the foregoing embodiment, or may be separately performed. In this application, an example in which steps S201 to S210 are separately performed is used for description. The solutions provided in this application are mainly described above from a perspective of interaction between network elements. It may be understood that, to implement the foregoing functions, each network element such as the first network node or the second network node includes a corresponding hardware structure and/or software module for performing each function. A person of ordinary skill in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In this application, the first network node, the second network node, or the like may be divided into function modules based on the foregoing method examples. For example, each function module may be obtained through division for a corresponding function, or two or more functions may be integrated into one processing module. The integrated module may be implemented in a form of hardware, or may be implemented in a form of a software functional module. It should be noted that division of modules in this application is merely an example, and is only division of logical functions. There may be other division manners during actual implementation. For ease of description, in this application, when structures of the first network node and the second network node are described, that the first network node is a gNB is used as an example, and that the second network node is an AMF is used as an example.

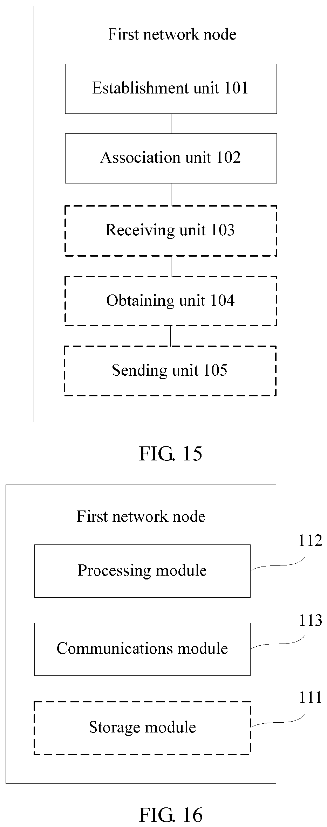

When an integrated unit is used, FIG. 15 is a possible schematic structural diagram of the first network node in the foregoing embodiment. The first network node includes an establishment unit 101 and an association unit 102. The establishment unit 101 is configured to support the first network node in performing steps S101 and S103 in the foregoing embodiment. The association unit 102 is configured to support the first network node in performing step S104 in the foregoing embodiment. In addition, the first network node provided in this application further includes a receiving unit 103 and an obtaining unit 104. The receiving unit 103 is configured to support the second network node in performing steps S106, S108, S1092a, S1091c, S1093c, and S110 in the foregoing embodiment. The obtaining unit 104 is configured to support the first network node in performing steps S109, S1093a, S1091b, S1092c, and S1094c in the foregoing embodiment. In addition, the first network node may further include a sending unit 105, configured to support the first network node in performing step S111 in the foregoing embodiment, and/or another process of the technology described in this specification. All related content of the steps in the foregoing method embodiment may be cited in function descriptions of corresponding function modules. Details are not described herein again.

Based on implementation by using hardware, the receiving unit 103 in this application may be a receiver of the first network node, the sending unit 105 may be a transmitter of the first network node, and the receiver and the transceiver may be usually integrated into a transceiver. Specifically, the receiving unit 103 and the sending unit 105 may be communications interfaces of the first network node, and the establishing unit 101, the association unit 102, and the obtaining unit 104 may be integrated into a processor of the first network node.

When an integrated unit is used, FIG. 16 is a possible schematic diagram of a logical structure of the first network node in the foregoing embodiment. The first network node includes a processing module 112 and a communications module 113. The processing module 112 is configured to control and manage actions of the first network node. For example, the processing module 112 is configured to support the first network node in performing steps S101, S103, S104, S109, S1093a, S1091b, S1092c, and S1094c in the foregoing embodiment. The communications module 113 is configured to support the first network node in performing steps S106, S108, S1092a, S1091c, S1093c, S110, and S111 in the foregoing embodiment, and/or another process of the technology described in this specification. The first network node may further include a storage module 111, configured to store program code and data of the first network node.

The processing module 112 may be a processor or controller, for example, the processing module 112 may be a central processing unit, a general-purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communications module 113 may be a transceiver, a transceiver circuit, a communications interface, or the like. The storage module 111 may be a memory.

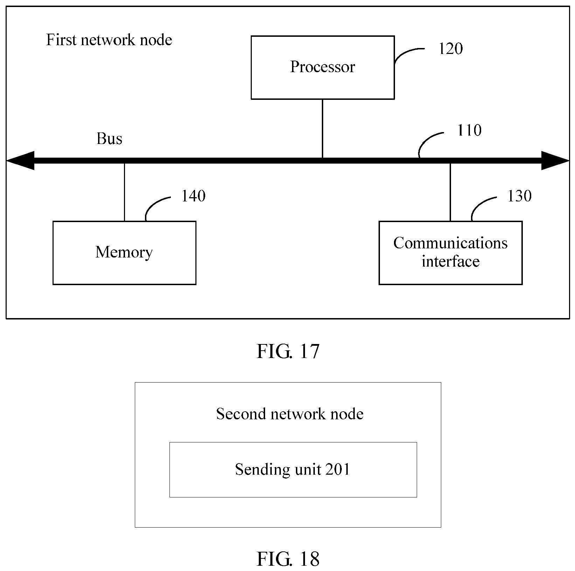

When the processing module 112 is a processor 120, the communications module 113 is a communications interface 130 or a transceiver, and the storage module 111 is a memory 140, the first network node in this application may be a device shown in FIG. 17.

The communications interface 130, the processor 120, and the memory 140 are connected to each other by using a bus 110. The bus 110 may be a PCI bus, an EISA bus, or the like. The bus may be classified into an address bus, a data bus, a control bus, and the like. For ease of representation, only one thick line is used to represent the bus in FIG. 17, but this does not mean that there is only one bus or only one type of bus. The memory 140 is configured to store program code and data of the first network node. The communications interface 130 is configured to support the first network node in communicating with another device (for example, the second network node), and the processor 120 is configured to support the first network node in executing the program code and the data that are stored in the memory 140, to implement the association management method provided in this application.

When an integrated unit is used, FIG. 18 is a possible schematic structural diagram of the second network node in the foregoing embodiment. The second network node includes a sending unit 201. The sending unit 201 is configured to support the second network node in performing steps S102, S105, S107, and S1091a in the foregoing embodiment. The sending unit 202 is configured to support the first network node in performing steps S103 and S106 in the foregoing embodiment, and/or another process of the technology described in this specification. All related content of the steps in the foregoing method embodiment may be cited in function descriptions of corresponding function modules. Details are not described herein again.

Based on implementation by using hardware, the sending unit 201 in this application may be a transmitter of the second network node. Generally, the second network node further includes a receiver, and the receiver and the transceiver may be integrated into a transceiver. Specifically, the sending unit 201 may be a communications interface of the first network node.

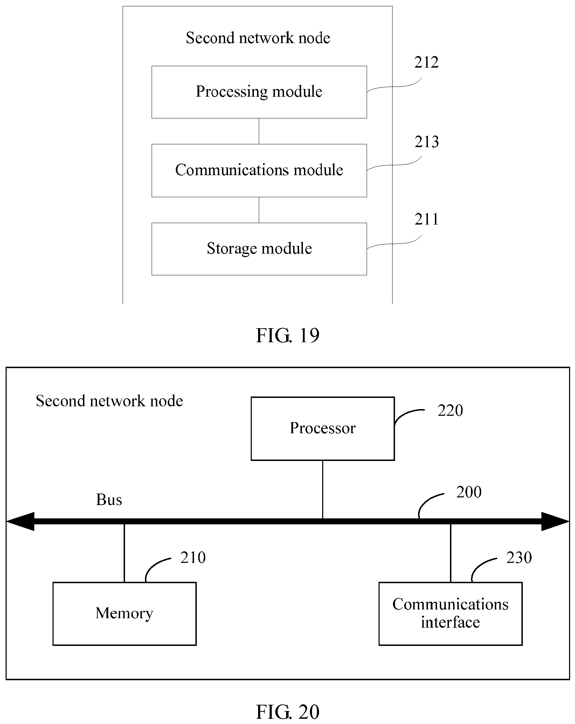

When an integrated unit is used, FIG. 19 is a possible schematic diagram of a logical structure of the second network node in the foregoing embodiment. The second network node includes a processing module 212 and a communications module 213. The processing module 212 is configured to control and manage actions of the second network node. For example, the processing module 212 is configured to support the second network node in performing steps S102, S105, S107, and S1091a in the foregoing embodiment by using the communications module 213. The first network node may further include a storage module 211, configured to store program code and data of the second network node.

The processing module 212 may be a processor or controller, for example, the processing module 212 may be a central processing unit, a general-purpose processor, a digital signal processor, an application-specific integrated circuit, a field programmable gate array or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the digital signal processor and a microprocessor. The communications module 213 may be a transceiver, a transceiver circuit, a communications interface, or the like. The storage module 211 may be a memory.

When the processing module 212 is a processor 220, the communications module 213 is a communications interface 230 or a transceiver, and the storage module 211 is a memory 210, the second network node in this application may be a device shown in FIG. 20.

The communications interface 230, the processor 220, and the memory 210 are connected to each other by using a bus 200. The bus 200 may be a PCI bus, an EISA bus, or the like. The bus may be classified into an address bus, a data bus, a control bus, and the like. For ease of representation, only one thick line is used to represent the bus in FIG. 20, but this does not mean that there is only one bus or only one type of bus. The memory 210 is configured to store program code and data of the second network node. The communications interface 230 is configured to support the second network node in communicating with another device (for example, the first network node), and the processor 220 is configured to support the second network node in executing the program code and the data that are stored in the memory 210, to implement the association management method provided in this application.

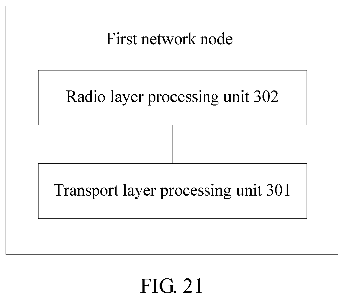

When an integrated unit is used, FIG. 21 is a possible schematic structural diagram of the first network node in the foregoing embodiment. The first network node may be a gNB, or may be an AMF. The first network node includes a transport layer processing unit 301 and a radio layer processing unit 302. The transport layer processing unit 301 is configured to support the first network node in performing steps S201, S202, and S205 in the foregoing embodiment. The radio layer processing unit 302 is configured to support the first network node in performing steps S203, S204, S206, S207, S209, and S210 in the foregoing embodiment, and/or another process of the technology described in this specification. All related content of the steps in the foregoing method embodiment may be cited in function descriptions of corresponding function modules. Details are not described herein again.

According to another embodiment of the present invention, a computer readable storage medium is further provided. The computer readable storage medium stores a computer executable instruction. When at least one processor of a first network node executes the computer executable instruction, the first network node performs steps S101, S103, S104, S109, S1093a, S1091b, S1092c, S106, S108, S1092a, S110, S1093c, S1094c, and S111 in the foregoing embodiment. Alternatively, when at least one processor of a second network node executes the computer executable instruction, the second network node performs steps S102, S105, S107, and S1091a in the foregoing embodiment, or steps S201, S202, S203, S204, S205, S206, S207, S208, S209, and S210 in the foregoing embodiment.

According to another embodiment of the present invention, a computer program product is further provided. The computer program product includes a computer executable instruction, and the computer executable instruction is stored in a computer readable storage medium. At least one processor of a first network node may read the computer executable instruction from the computer readable storage medium, and the at least one processor of the first network node executes the computer executable instruction, so that the first network node performs steps S101, S103, S104, S109, S1093a, S1091b, S1092c, S106, S108, S1092a, S1091c, S110, S1093c, S1094c, and S111 in the foregoing embodiment. Alternatively, when at least one processor of a second network node executes the computer executable instruction, the second network node performs steps S102, S105, S107, and S1091a in the foregoing embodiment, or steps S201, S202, S203, S204, S205, S206, S207, S208, S209, and S210 in the foregoing embodiment.

According to another embodiment of the present invention, a communications system is further provided. The communications system includes one or more second network nodes and one or more first network nodes, and there is a first interface between any one of the one or more first network nodes and one of the one or more second network nodes. Specifically, the communications system may be a base station.

For explanations and beneficial effects of related content in any apparatus provided above, refer to the foregoing corresponding method embodiments provided above. Details are not described herein again.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

## Claims

1. An association management method, comprising:
establishing (S103), by a first network node, a first association with a second network node for a first interface, wherein the first interface is a connection interface between the first network node and the second network node; and
associating (S104), by the first network node, a first identifier with the first association, wherein the first identifier is used to identify the first association, wherein the first identifier is an index, wherein when the first network node establishes the first association, there is already a second association on the first interface, and the establishing (S103), by a first network node, a first association with a second network node for a first interface comprises:
receiving, by the first network node on the second association, a first association list sent by the second network node, wherein the first association list comprises at least one of an address used to establish the first association and a first identifier associated with the address; and
establishing, by the first network node, the first association with the second network node for the first interface based on the first association list.

2. The association management method according to claim 1, wherein the method further comprises:
receiving (S102), by the first network node, a first message sent by the second network node, wherein the first message carries an identifier of a to-be-released association, and the first message is used to instruct the first network node to release an association associated with the identifier of the to-be-released association.

3. The association management method according to any one of claims 1 to 2, wherein the method further comprises:
receiving (S105), by the first network node, a second message sent by the second network node, wherein the second message carries an identifier of a third association, the second message is used to instruct the first network node to use the third association associated with the identifier of the third association as a primary association, and the primary association is used to transmit common signaling on the first interface.

4. The association management method according to any one of claims 1 to 3 wherein the method further comprises:
receiving (S108), by the first network node, a third message sent by the second network node, wherein the third message comprises a second association list, the second association list comprises at least one first identifier, and the at least one first identifier is used to instruct to use an association associated with the at least one first identifier to send or receive a special interface message, or the at least one first identifier is used to instruct the first network node to use an association associated with the at least one first identifier as a candidate primary association.

5. The association management method according to any one of claims 1 to 4, wherein the method further comprises:
receiving, by the first network node, a fourth message sent by the second network node, wherein the fourth message comprises a third association list, the third association list comprises at least one first address and a first identifier associated with each of the at least one first address, the at least one first address is used by the first network node to establish a fourth association for the first interface, and the fourth association is used to send or receive a special interface message or is used as a candidate primary association.

6. The association management method according to claim 4 or 5, wherein the special interface message comprises any one of the following messages: an initial UE message, an HO request message, a triangular redirection message, and a path switch request message.

7. The association management method according to any one of claims 1 to 6, wherein the method further comprises:
obtaining (S109), by the first network node, an association relationship between user equipment UE and a fifth association, wherein the association relationship is used to instruct the first network node to send UE-associated signaling of the UE on the fifth association, the fifth association is an association on the first interface, and the association relationship comprises at least one of the following information: a relationship between an identifier of the UE and a second identifier of the fifth association, and a relationship between the identifier of the UE and an address used to establish the fifth association.

8. The association management method according to claim 7, wherein the obtaining (S109), by the first network node, an association relationship between user equipment UE and a fifth association comprises:
receiving (S1093c), by the first network node, the association relationship that is between the UE and the fifth association and that is sent by the second network node; or
when receiving the UE-associated signaling of the UE on the fifth association, obtaining (S1094c), by the first network node, the association relationship between the UE and the fifth association; or
receiving, by the first network node, a fifth message sent by a third network node, wherein the fifth message is used to instruct the UE to hand over to the first network node, the fifth message comprises a second address, and the second address is an address used to establish the fifth association.

9. The association management method according to claim 7 or 8, wherein after the obtaining (S109), by the first network node, an association relationship between user equipment UE and a fifth association, the method comprises:
establishing, by the first network node, the fifth association based on the association relationship between the UE and the fifth association.

10. An association management method, comprising:
sending, by a second network node, a first association list to a first network node by using a second association on a first interface, wherein the first association list comprises at least one of an address used to establish a first association between the first network node and the second network node on the first interface and a first identifier associated with the address, and the second association is an association used to transmit common signaling on the first interface and already established when the first network node establishes the first association, wherein the first identifier is an index

11. A network node, comprising a memory (140), a processor (120), a bus (110), and a communications interface (130), wherein the memory (140) stores code and data, the processor (120) is connected to the memory (140) by using the bus (110), and the processor (120) runs the code in the memory (140), so that the network node performs the association management method according to any one of claims 1 to 9, or the association management method according to claim 10.

12. A computer readable storage medium, wherein the computer readable storage medium stores a computer program, and when the program runs on a network node, the association management method according to any one of claims 1 to 9, or the association management method according to claim 10 is performed.

## Patentansprüche

1. Zuordnungsverwaltungsverfahren, umfassend:
Herstellen (S103) einer ersten Zuordnung zu einem zweiten Netzwerkknoten für eine erste Schnittstelle durch einen ersten Netzwerkknoten, wobei die erste Schnittstelle eine Verbindungsschnittstelle zwischen dem ersten Netzwerkknoten und dem zweiten Netzwerkknoten ist; und
Zuordnen (S104) einer ersten Kennung zu der ersten Zuordnung durch den ersten Netzwerkknoten, wobei die erste Kennung verwendet wird, um die erste Zuordnung zu identifizieren, wobei die erste Kennung ein Index ist, wobei, wenn der erste Netzwerkknoten die erste Zuordnung herstellt, bereits eine zweite Zuordnung an der ersten Schnittstelle besteht und das Herstellen (S103) einer ersten Zuordnung zu einem zweiten Netzwerkknoten für eine erste Schnittstelle durch einen ersten Netzwerkknoten umfasst:
Empfangen einer durch den zweiten Netzwerkknoten gesendeten ersten Zuordnungsliste durch den ersten Netzwerkknoten an der zweiten Zuordnung, wobei die erste Zuordnungsliste eine Adresse, die verwendet wird, um die erste Zuordnung herzustellen, und/oder eine der Adresse zugeordnete erste Kennung umfasst; und
Herstellen der ersten Zuordnung zu dem zweiten Netzwerkknoten für die erste Schnittstelle basierend auf der ersten Zuordnungsliste durch den ersten Netzwerkknoten.

2. Zuordnungsverwaltungsverfahren nach Anspruch 1, wobei das Verfahren ferner umfasst:
Empfangen (S102) einer durch den zweiten Netzwerkknoten gesendeten ersten Nachricht durch den ersten Netzwerkknoten, wobei die erste Nachricht eine Kennung einer freizugebenden Zuordnung trägt und die erste Nachricht verwendet wird, um den ersten Netzwerkknoten anzuweisen, eine der Kennung der freizugebenden Zuordnung zugeordnete Zuordnung freizugeben.

3. Zuordnungsverwaltungsverfahren nach einem der Ansprüche 1 bis 2, wobei das Verfahren ferner umfasst:
Empfangen (S105) einer durch den zweiten Netzwerkknoten gesendeten zweiten Nachricht durch den ersten Netzwerkknoten, wobei die zweite Nachricht eine Kennung einer dritten Zuordnung trägt, die zweite Nachricht verwendet wird, um den ersten Netzwerkknoten anzuweisen, die der Kennung der dritten Zuordnung zugeordnete dritte Zuordnung als eine Primärzuordnung zu verwenden, und die Primärzuordnung verwendet wird, um eine gemeinsame Zeichengabe an der ersten Schnittstelle zu übertragen.

4. Zuordnungsverwaltungsverfahren nach einem der Ansprüche 1 bis 3, wobei das Verfahren ferner umfasst:
Empfangen (S108) einer durch den zweiten Netzwerkknoten gesendeten dritten Nachricht durch den ersten Netzwerkknoten, wobei die dritte Nachricht eine zweite Zuordnungsliste umfasst, die zweite Zuordnungsliste mindestens eine erste Kennung umfasst und die mindestens eine erste Kennung verwendet wird, um anzuweisen, eine der mindestens einen ersten Kennung zugeordnete Zuordnung zu verwenden, um eine spezielle Schnittstellennachricht zu senden oder zu empfangen, oder die mindestens eine erste Kennung verwendet wird, um den ersten Netzwerkknoten anzuweisen, eine der mindestens einen ersten Kennung zugeordnete Zuordnung als einen Primärzuordnungskandidat zu verwenden.

5. Zuordnungsverwaltungsverfahren nach einem der Ansprüche 1 bis 4, wobei das Verfahren ferner umfasst:
Empfangen einer durch den zweiten Netzwerkknoten gesendeten vierten Nachricht durch den ersten Netzwerkknoten, wobei die vierte Nachricht eine dritte Zuordnungsliste umfasst, die dritte Zuordnungsliste mindestens eine erste Adresse und eine jeder der mindestens einen ersten Adresse zugeordnete erste Kennung umfasst, die mindestens eine erste Adresse durch den ersten Netzwerkknoten verwendet wird, um eine vierte Zuordnung für die erste Schnittstelle herzustellen, und die vierte Zuordnung verwendet wird, um eine spezielle Schnittstellennachricht zu senden oder zu empfangen, oder als ein Primärzuordnungskandidat verwendet wird.

6. Zuordnungsverwaltungsverfahren nach Anspruch 4 oder 5, wobei die spezielle Schnittstellennachricht eine beliebige der folgenden Nachrichten umfasst:
eine anfängliche UE-Nachricht, eine HO-Anforderungsnachricht, eine Dreiecksumleitungsnachricht und eine Pfadwechselanforderungsnachricht.

7. Zuordnungsverwaltungsverfahren nach einem der Ansprüche 1 bis 6, wobei das Verfahren ferner umfasst:
Erhalten (S109) einer Zuordnungsbeziehung zwischen einer Benutzereinrichtung (*user equipment-* UE) und einer fünften Zuordnung durch den ersten Netzwerkknoten, wobei die Zuordnungsbeziehung verwendet wird, um den ersten Netzwerkknoten anzuweisen, die UE-zugeordnete Zeichengabe der UE an der fünften Zuordnung zu senden, die fünfte Zuordnung eine Zuordnung an der ersten Schnittstelle ist und die Zuordnungsbeziehung folgende Informationen umfasst:
eine Beziehung zwischen einer Kennung der UE und einer zweiten Kennung der fünften Zuordnung und/oder eine Beziehung zwischen der Kennung der UE und einer Adresse, die verwendet wird, um die fünfte Zuordnung herzustellen.

8. Zuordnungsverwaltungsverfahren nach Anspruch 7, wobei das Erhalten (S109) einer Zuordnungsbeziehung zwischen der Benutzereinrichtung (UE) und einer fünften Zuordnung durch den ersten Netzwerkknoten umfasst:
Empfangen (S1093c) der Zuordnungsbeziehung, die zwischen der UE und der fünften Zuordnung besteht und die durch den zweiten Netzwerkknoten gesendet wird, durch den ersten Netzwerkknoten; oder,
wenn die UE-zugeordnete Zeichengabe der UE an der fünften Zuordnung empfangen wird, Erhalten (S1094c) der Zuordnungsbeziehung zwischen der UE und der fünften Zuordnung durch den ersten Netzwerkknoten; oder
Empfangen einer durch einen dritten Netzwerkknoten gesendeten fünften Nachricht durch den ersten Netzwerkknoten, wobei die fünfte Nachricht verwendet wird, um die UE anzuweisen, an den ersten Netzwerkknoten zu übergeben, die fünfte Nachricht eine zweite Adresse umfasst und die zweite Adresse eine Adresse ist, die verwendet wird, um die fünfte Zuordnung herzustellen.

9. Zuordnungsverwaltungsverfahren nach Anspruch 7 oder 8, wobei nach dem Erhalten (S109) einer Zuordnungsbeziehung zwischen der Benutzereinrichtung (UE) und einer fünften Zuordnung durch den ersten Netzwerkknoten das Verfahren umfasst:
Herstellen der fünften Zuordnung basierend auf der Zuordnungsbeziehung zwischen der UE und der fünften Zuordnung durch den ersten Netzwerkknoten.

10. Zuordnungsverwaltungsverfahren, umfassend:
Senden einer ersten Zuordnungsliste an einen ersten Netzwerkknoten durch einen zweiten Netzwerkknoten durch Verwenden einer zweiten Zuordnung an einer ersten Schnittstelle, wobei die erste Zuordnungsliste eine Adresse, die verwendet wird, um eine erste Zuordnung zwischen dem ersten Netzwerkknoten und dem zweiten Netzwerkknoten an der ersten Schnittstelle herzustellen, und/oder eine der Adresse zugeordnete erste Kennung umfasst und die zweite Zuordnung eine Zuordnung ist, die verwendet wird, um die gemeinsame Zeichengabe an der ersten Schnittstelle zu übertragen und bereits hergestellt ist, wenn der erste Netzwerkknoten die erste Zuordnung herstellt, wobei die erste Kennung ein Index ist.

11. Netzwerkknoten, umfassend einen Speicher (140), einen Prozessor (120), einen Bus (110) und eine Kommunikationsschnittstelle (130), wobei der Speicher (140) Code und Daten speichert, der Prozessor (120) durch Verwenden des Busses (110) mit dem Speicher (140) verbunden ist und der Prozessor (120) den Code in dem Speicher (140) ausführt, so dass der Netzwerkknoten das Zuordnungsverwaltungsverfahren nach einem der Ansprüche 1 bis 9 oder das Zuordnungsverwaltungsverfahren nach Anspruch 10 durchführt.

12. Computerlesbares Speichermedium, wobei das computerlesbare Speichermedium ein Computerprogramm speichert und, wenn das Programm auf einem Netzwerkknoten ausgeführt wird, das Zuordnungsverwaltungsverfahren nach einem der Ansprüche 1 bis 9 oder das Zuordnungsverwaltungsverfahren nach Anspruch 10 durchgeführt wird.

## Revendications

1. Procédé de gestion d'association, comprenant :
l'établissement (S103), par un premier nœud de réseau, d'une première association à un deuxième nœud de réseau pour une première interface, la première interface étant une interface de connexion entre le premier nœud de réseau et le deuxième nœud de réseau ; et
l'association (S104), par le premier nœud de réseau, d'un premier identifiant à la première association, le premier identifiant étant utilisé pour identifier la première association, le premier identifiant étant un index, lorsque le premier nœud de réseau établit la première association, une deuxième association existant déjà sur la première interface, et l'établissement (S103), par un premier nœud de réseau, d'une première association à un deuxième nœud de réseau pour une première interface comprenant :
la réception, par le premier nœud de réseau sur la deuxième association, d'une première liste d'associations envoyée par le deuxième nœud de réseau, la première liste d'associations comprenant une adresse utilisée pour établir la première association et/ou un premier identifiant associé à l'adresse ; et
l'établissement, par le premier nœud de réseau, de la première association au deuxième nœud de réseau pour la première interface sur la base de la première liste d'associations.

2. Procédé de gestion d'association selon la revendication 1, le procédé comprenant en outre :
la réception (S102), par le premier nœud de réseau, d'un premier message envoyé par le deuxième nœud de réseau, le premier message portant un identifiant d'une association à libérer, et le premier message étant utilisé pour ordonner au premier nœud de réseau de libérer une association associée à l'identifiant de l'association à libérer.

3. Procédé de gestion d'association selon l'une quelconque des revendications 1 à 2, le procédé comprenant en outre :
la réception (S105), par le premier nœud de réseau, d'un deuxième message envoyé par le deuxième nœud de réseau, le deuxième message portant un identifiant d'une troisième association, le deuxième message étant utilisé pour ordonner au premier nœud de réseau d'utiliser la troisième association associée à l'identifiant de la troisième association comme association primaire, et l'association primaire étant utilisée pour transmettre une signalisation commune sur la première interface.

4. Procédé de gestion d'association selon l'une quelconque des revendications 1 à 3, le procédé comprenant en outre :
la réception (S108), par le premier nœud de réseau, d'un troisième message envoyé par le deuxième nœud de réseau, le troisième message comprenant une seconde liste d'associations, la seconde liste d'associations comprenant au moins un premier identifiant, et l'au moins un premier identifiant étant utilisé pour ordonner d'utiliser une association associée à l'au moins un premier identifiant pour envoyer ou recevoir un message d'interface spéciale, ou l'au moins un premier identifiant servant à ordonner au premier nœud de réseau d'utiliser une association associée à l'au moins un premier identifiant en tant qu'association primaire candidate.

5. Procédé de gestion d'association selon l'une quelconque des revendications 1 à 4, le procédé comprenant en outre :
la réception, par le premier nœud de réseau, d'un quatrième message envoyé par le deuxième nœud de réseau, le quatrième message comprenant une troisième liste d'associations, la troisième liste d'associations comprenant au moins une première adresse et un premier identifiant associé à chacune de l'au moins une première adresse, l'au moins une première adresse étant utilisée par le premier nœud de réseau pour établir une quatrième association pour la première interface, et la quatrième association étant utilisée pour envoyer ou recevoir un message d'interface spécial ou étant utilisée comme association primaire candidate.

6. Procédé de gestion d'association selon la revendication 4 ou 5, le message d'interface spéciale comprenant l'un quelconque des messages suivants : un message initial d'UE, un message de demande de transfert, un message de redirection triangulaire et un message de demande de commutation de trajet.

7. Procédé de gestion d'association selon l'une quelconque des revendications 1 à 6, le procédé comprenant en outre :
l'obtention (S109), par le premier nœud de réseau, d'une relation d'association entre l'équipement utilisateur, UE, et une cinquième association, la relation d'association étant utilisée pour ordonner au premier nœud de réseau d'envoyer une signalisation associée à l'UE de l'UE sur la cinquième association, la cinquième association étant une association sur la première interface, et la relation d'association comprenant : une relation entre un identifiant de l'UE et/ou un second identifiant de la cinquième association, et/ou une relation entre l'identifiant de l'UE et/ou une adresse utilisée pour établir la cinquième association.

8. Procédé de gestion d'association selon la revendication 7, l'obtention (S109), par le premier nœud de réseau, d'une relation d'association entre l'équipement utilisateur, UE, et une cinquième association comprenant :
la réception (S1093c), par le premier nœud de réseau, de la relation d'association qui est entre l'UE et la cinquième association et qui est envoyée par le deuxième nœud de réseau ; ou
lors de la réception de la signalisation associée à l'UE de l'UE sur la cinquième association, l'obtention (S1094c), par le premier nœud de réseau, de la relation d'association entre l'UE et la cinquième association ; ou
la réception, par le premier nœud de réseau, d'un cinquième message envoyé par un nœud de réseau, le cinquième message étant utilisé pour ordonner à l'UE de de réaliser un transfert vers le premier nœud de réseau, le cinquième message comprenant une seconde adresse et la seconde adresse étant une adresse utilisée pour établir la cinquième association.

9. Procédé de gestion d'association selon la revendication 7 ou 8, après l'obtention (S109), par le premier nœud de réseau, d'une relation d'association entre l'équipement utilisateur, UE, et une cinquième association, le procédé comprenant :
l'établissement, par le premier nœud de réseau, de la cinquième association sur la base de la relation d'association entre l'UE et la cinquième association.

10. Procédé de gestion d'association, comprenant :
l'envoi, par un deuxième nœud de réseau, d'une première liste d'associations à un premier nœud de réseau en utilisant une deuxième association sur une première interface, la première liste d'associations comprenant une adresse utilisée pour établir une première association entre le premier nœud de réseau et le deuxième nœud de réseau sur la première interface et un premier identifiant associé à l'adresse, et/ou la deuxième association étant une association utilisée pour transmettre une signalisation commune sur la première interface et déjà établie lorsque le premier nœud de réseau établit la première association, le premier identifiant étant un index.

11. Nœud de réseau, comprenant une mémoire (140), un processeur (120), un bus (110) et une interface de communications (130), la mémoire (140) stockant du code et des données, le processeur (120) étant connecté à la mémoire (140) à l'aide du bus (110), et le processeur (120) exécutant le code dans la mémoire (140), de sorte que le nœud de réseau exécute le procédé de gestion d'association selon l'une quelconque des revendications 1 à 9, ou le procédé de gestion d'association selon la revendication 10.

12. Support de stockage lisible par ordinateur, le support de stockage lisible par ordinateur stockant un programme informatique, et lorsque le programme s'exécute sur un nœud de réseau, le procédé de gestion d'association selon l'une quelconque des revendications 1 à 9, ou le procédé de gestion d'association selon la revendication 10 étant exécuté.
